# EUROPÄISCHE PATENTSCHRIFT

(11) **EP 2 102 420 B1**
(45) Veröffentlichungstag und Bekanntmachung des Hinweises auf die Patenterteilung: **12.01.2011**
(21) Anmeldenummer: 07856273.3
(22) Anmeldetag: 28.11.2007
(51) Int. Cl.: E02F 9/28, E02F 3/815

(54) **VERSCHLEISSELEMENT SOWIE DAMIT AUSGERÜSTETES BAUTEIL**
WEAR ELEMENT, AND COMPONENT PROVIDED THEREWITH
ÉLÉMENT D'USURE ET PIÈCE ÉQUIPÉE D'UN TEL ÉLÉMENT

(30) Priorität: 19.12.2006 DE 102006059894
(43) Veröffentlichungstag der Anmeldung: 23.09.2009
(73) Patentinhaber: Bucyrus HEX GmbH, 44149 Dortmund (DE)
(72) Erfinder: DIETRICH, Michael, 44229 Dortmund (DE)
(86) Internationale Anmeldenummer: PCT/EP2007/010308
(87) Internationale Veröffentlichungsnummer: WO 2008/074387

(56) Entgegenhaltungen:
- DE-U1-202004 003 910
- FR-A- 2 304 021
- JP-A- 11 090 251
- US-A- 2 210 357
- US-A- 4 396 234
- US-A- 4 886 218
- US-A- 5 564 508

## Beschreibung

Die Erfindung betrifft ein Verschleißelement für abrasivem Einfluss ausgesetzte Bauteile gemäß gattungsbildendem Teil des ersten Patentanspruchs.

Allgemein bekannt sind Verschleißelemente, die aus einem Grundkörper (schweißbares Trägermaterial) bestehen, auf welchem eine harte Verschleißschicht aufgelötet ist. Nachteil derartiger Bauteile ist die Lötstelle zwischen Grundkörper und Verschleißschicht. Impulsartige Belastungen im Betriebszustand können nur begrenzt aufgenommen werden, so dass die Standzeit des mit dem Verschleißelement ausgerüsteten Aufnahmeelementes für Schüttgut begrenzt ist. Bei Einsatz derartiger Verschleißelemente in Radien können nur sehr kleine Einheiten angeschweißt werden. Dies erhöht den Zeitaufwand, was mit ebenfalls erhöhten Kosten einhergeht.

Die DE 201 05 994 U1 offenbart eine Panzerung für eine verschleißgefährdete Oberfläche, gebildet durch eine strukturierte Oberfläche, unter Ausbildung von Taschen zur Aufnahme von auf die Panzerung einwirkendem Material zur Ausbildung eines autogenen Verschleißschutzes. Die Panzerung ist hierbei aus einem zumindest abschnittsweise zusammenhängenden und bezüglich seiner mechanischen Belastungseigenschaften im Wesentlichen homogenen Körper mit den darin zur Außenseite hin offenen Taschen gebildet. Konkrete Einsatzbereiche werden durch Baggerschaufeln, Bergbaugeräte und Walzenpressen definiert. In den bedarfsweise unterschiedlich ausgestalteten Taschen werden entsprechend geformte Harteinsätze eingebracht, wobei der Grundkörper durch Schweißen mit dem jeweiligen Bauteil verbunden wird. Derartige Bauteile sind aufwändig herzustellen und demzufolge mit hohen Kosten verbunden. Hinsichtlich ihrer äußeren Geometrie ist es schwierig, selbige im Bereich von Radien vorzusehen.

Durch die DE 20 2004 003 910 U1 ist ein Greifwerkzeug, vorzugsweise ein Mehrschalengreifer, bekannt geworden, das mindestens eine Greiferschale mit mindestens einem Zinken umfasst. An der mindestens einen Greiferschale ist mindestens ein Verschleißelement derart angeordnet, dass die Hauptverschleißbereiche durch das mindestens eine Verschleißelement abgedeckt ist. Die Verschleißelemente sind als Kreissegmente gestaltet und umschließen die dem Verschleiß ausgesetzten gerundeten Bereiche der Greiferschale.

Der FR 2 304 021 ist ein Verschleißelement zu entnehmen, das auf verschleißanfälligen Bauteilen einer Baumaschine aufgebracht werden kann. Das Verschleißelement ist nach Art eines Schildes ausgebildet, bestehend aus hochfestem Stahl und ist mindestens an seinem Umfang mit der jeweiligen Oberfläche verbindbar. Die Oberfläche des Schildes ist mit einer Wölbung versehen, dergestalt, dass der Schildumfang kegelschnitt- oder polygonförmig ausgebildet ist.

Die US 5,564,508 beschreibt ein austauschbares Verschleißelement, das in Randbereichen einer Baggerschaufel positioniert werden kann. Durch definierte Verriegelungselemente wird das jeweilige Verschleißelement austauschbar im jeweiligen Einsatzbereich positioniert und kann nach Verschleiß durch ein andersartiges Verschleißelement ersetzt werden.

Ziel des Erfindungsgegenstandes ist es, einerseits ein Verschleißelement für abrasivem Einfluss ausgesetzte Bauteile bereitzustellen, das gegenüber dem aufgezeigten Stand der Technik einfacher und kostengünstiger herstellbar ist und darüber hinaus an beliebigen Stellen des zu schützenden Bauteils befestigt werden kann.

Andererseits soll ein mit dem Verschleißelement ausgerüstetes Bauteil vorgeschlagen werden, bei dem durch Einsatz des Verschleißelementes eine Standzeiterhöhung herbeigeführt werden kann.

Dieses Ziel wird erreicht durch ein Verschleißelement für abrasivem Einfluss ausgesetzte Bauteile, insbesondere einsetzbar im Bereich eines Aufnahmeelementes für Schüttgut, gebildet durch einen einstückigen Gusskörper aus einer verschleißfesten Legierung, wobei der Gusskörper in keiner Ebene plan ausgebildet ist, **dadurch gekennzeichnet, dass** der Gusskörper etwa plattenartig ausgebildet ist und einen etwa rechteckigen Querschnitt aufweist, wobei sowohl die Längs- als auch die Querseiten durch ineinander übergehende gerundete Abschnitte gebildet sind.

Vorteilhafte Weiterbildungen des erfindungsgemäßen Verschleißelementes sind den zugehörigen Unteransprüchen zu entnehmen.

Dieses Ziel wird auch erreicht durch ein mit einem Verschleißelement ausgerüstetes abrasivem Einfluss ausgesetztes Bauteil, insbesondere ein Aufnahmeelement für Schüttgut, wobei das Verschleißelement an definierten inneren und/oder äußeren Flächen eines Aufnahmeelementes für einen Bagger, insbesondere einen Großbagger, vorgesehen ist.

Vorteilhafte Weiterbildungen des erfindungsgemäßen mit dem Verschleißelement ausgerüsteten Bauteils sind den zugehörigen Unteransprüchen zu entnehmen.

Gegenüber dem Stand der Technik wird somit ein einteiliger Gusskörper vorgeschlagen, der universell einsetzbar ist. Der etwa plattenartig ausgebildete Gusskörper ist in allen Ebenen mit gerundeten Flächenbereichen versehen und besitzt, einem weiteren Gedanken der Erfindung gemäß, Schweißnahtvorbereitungen für verdeckte HV-Nähte.

Aufgrund seiner geometrischen Ausgestaltung kann der Gusskörper in jeder Orientierung (längs, quer, diagonal), sowohl im Schaufelinnem als auch auf der Schaufelaußenseite, verwendet werden.

Als Material für den Gusskörper kommt vorteilhafterweise eine Legierung zum Einsatz, deren wesentliche Elemente gebildet werden durch Eisen, Chrom, Silizium, Molybdän und Vanadium.

Aufgrund der Plattendicke und der sehr stabilen Schweißanbindung reichen zum Schutz eines als Schaufel ausgebildeten Aufnahmeelementes wenige Gusskörper aus. Dies spart sowohl Fertigungskosten als auch Gewicht. Mit dem Verschleißelement können Schaufeln, Löffel oder dergleichen Aufnahmeelemente für schüttförmige Güter ausgerüstet werden. Als bevorzugter Anwendungsfall wird das Aufnahmeelement eines Baggers, insbesondere eines im Minenbetrieb tätigen Großbaggers, angesehen.

Mit zwei bis drei verschiedenen Größen dieses Gußkörpers lassen sich sämtliche bekannten Aufnahmeelemente für Schüttgut auf einfache Art kostengünstig panzern, wobei die Standzeit des jeweiligen Aufnahmeelementes gegenüber der bisherigen Panzerung erhöht ist.

Der Erfindungsgegenstand ist anhand eines Ausführungsbeispiels in der Zeichnung dargestellt und wird wie folgt beschrieben. Es zeigen:
- Figur 1: Prinzipskizze eines erfindungsgemäßen Verschleißelements als räumliche Darstellung;
- Figur 2: Angedeutetes schaufelartig ausgebildetes Aufnahmeelement samt Verschleißelementen, beispielsweise einsetzbar für einen Hydraulikbagger;
- Figur 3: Ausschnitt von der Schaufeluntersette gemäß Figur 2;
- Figur 4: Ausschnitt aus dem Schaufelinnem gemäß Figur 2.

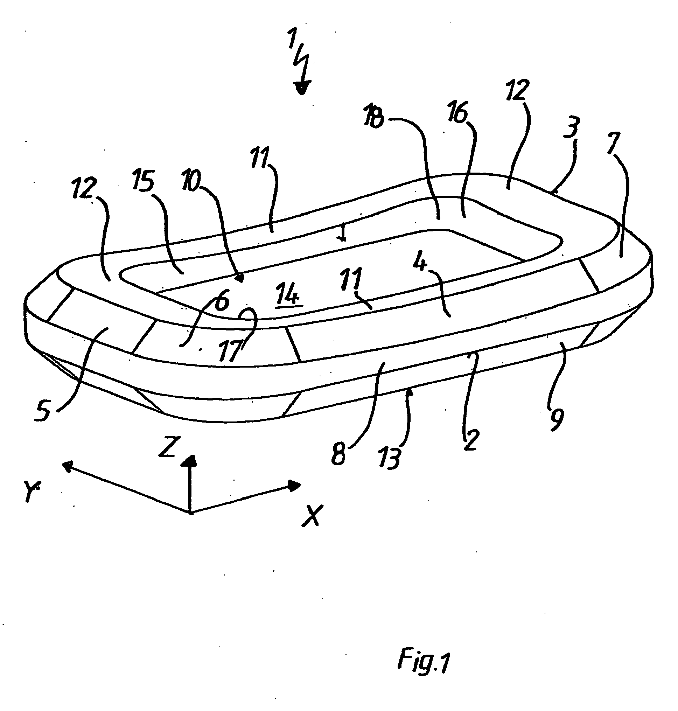

Figur 1 zeigt das erfindungsgemäße Verschleißelement 1, das aus einem einstückigen, etwa rechteckigen Gusskörper aus einer verschleißfesten Legierung, gebildet ist, wobei das Verschleißelement 1 in keiner Ebene (X, Y, Z) plan ausgebildet ist. Sowohl die Längsseiten 2 als auch die Querseiten 3 des Verschleißelementes 1 sind mit gerundeten Abschnitten 4,5 versehen, die in ebenfalls gerundete Eckbereiche 6,7 einlaufen, dergestalt, dass die Abschnitte 4,5,6,7 ineinander übergehen. In gleicher Weise sind die, in Z-Richtung gesehen, übereinander angeordneten Bereiche 4,8,9 zu werten, die ebenfalls gerundet ausgebildet sind und ineinander übergehen. Im Bereich einer der Stirnflächen ist eine Ausnehmung 10 eingebracht, so dass umlaufende, gerundet ausgebildete Randbereiche 11, 12 gebildet werden. Die Randbereiche 11,12 sind dergestalt vorgesehen, dass ein nach innen gewölbter (konkaver) Randbereich 11,12 erzeugt wird. Die gegenüberliegende Stirnfläche 13 ist (hier nicht erkennbar) nach außen gewölbt, d.h. konvex vorgesehen. Der Grad der jeweiligen Wölbung wird durch den Fachmann hinsichtlich des konkreten Einsatzbereiches vorgegeben. Vom Randbereich 11,12 erstrecken sich zum Boden 14 der Ausnehmung 10 weitere gerundet ausgebildete Wandabschnitte 15,16, die über gerundete Eckbereiche 17,18 miteinander in Wirkverbindung stehen. Im Bereich des Bodens 14 können bedarfsweise vorgebbare Symbole (z.B. Firmenlogo, Bautellbezeichnung oder dergleichen) gießtechnisch eingebracht werden.

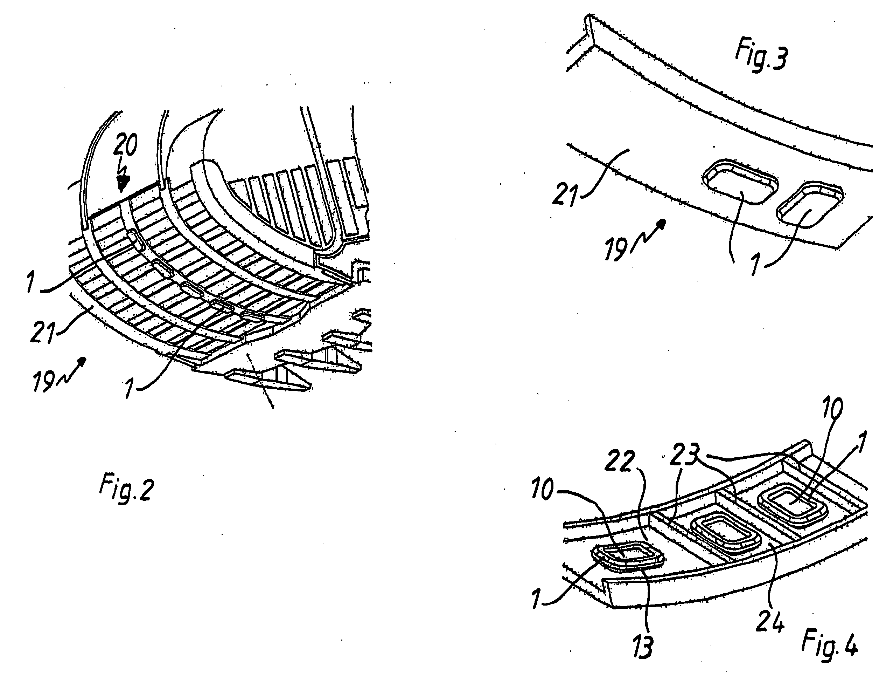

Figur 2 zeigt ein lediglich angedeutetes Aufnahmeelement 19 für Schüttgut, das hier durch die Ladeschaufel eines nicht weiter dargestellten Hydraulikbaggers gebildet wird. An definierten Stellen 20, sind mehrere der in Figur 1 dargestellten Verschleißelemente 1 aufgeschweißt. Figur 2 zeigt den nach außen gewölbten, d.h. konvexen, äußeren Bereich 21 des Aufnahmeelements 19. Die Verschleißelemente 1 sind mit ihrer nach innen gewölbten Stirnfläche, gebildet durch die Randbereiche 11,12 (Figur 1), schweißtechnisch mit dem Bereich 21 verbunden und schützen somit die abrasivem Einfluss durch das aufzunehmende Schüttgut ausgesetzten Bereiche 21 des Aufnahmeelements 19.

Figur 3 zeigt einen Ausschnitt vom unteren zu schützenden Bereich 21 des Aufnahmeelements 19 gemäß Figur 2. Erkennbar sind Verschleißelemente 1, die in jeder Orientierung (längs, quer) im Bereich 21 des Aufnahmeelements 19 durch Schweißen aufgebracht werden können.

Figur 4 zeigt die Positionierung von Verschleißelementen 1 im Innenbereich 22 des Aufnahmeelements 19. Dargestellt ist eine Wabenpanzerung 23, wobei in den einzelnen Fächern der Wabenpanzerung 23 die Verschleißelemente 1 vorgesehen sind. In dieser Darstellung sind die Verschleißelemente 1 mit ihrer nach außen gewölbten, d.h. konvexen Stirnfläche 13 im Bereich des jeweiligen Wabenbodens 24 durch Schweißen befestigt, wobei die jeweiligen Ausnehmungen 10 (Figur 1) nach oben weisen.

### Bezugszeichenliste

- 1: Verschleißelement/Gusskörper
- 2: Längsseite
- 3: Querseite
- 4: Abschnitt (Bereich)
- 5: Abschnitt
- 6: Abschnitt (Eckbereich)
- 7: Abschnitt (Eckbereich)
- 8: Bereich (Abschnitt)
- 9: Bereich (Abschnitt)
- 10: Ausnehmung
- 11: Randbereich
- 12: Randbereich
- 13: Stirnfläche
- 14: Boden
- 15: Wandabschnitt
- 16: Wandabschnitt
- 17: Eckbereich
- 18: Eckbereich
- 19: Aufnahmeelement (Schaufel)
- 20: definierte Stelle
- 21: äußerer Bereich
- 22: Innenbereich
- 23: Wabenpanzerung
- 24: Wabenboden

## Patentansprüche

1. Verschleißelement für abrasivem Einfluss ausgesetzte Bauteile, insbesondere einsetzbar im Bereich eines Aufnahmeelementes (19) für Schüttgut, gebildet durch einen einstückigen Gusskörper aus einer verschleißfesten Legierung, wobei der Gusskörper (1) in keiner Ebene (X, Y, Z) plan ausgebildet ist, **dadurch gekennzeichnet, dass** der Gusskörper (1) etwa plattenartig ausgebildet ist und einen etwa rechteckigen Querschnitt aufweist, wobei sowohl die Längs- (2) als auch die Querseiten (3) durch ineinander übergehende gerundete Abschnitte (5,6,7,8) gebildet sind.

2. Verschleißelement nach Anspruch 1, **dadurch gekennzeichnet, dass** der Gusskörper (1), über seine Höhe (Z) gesehen, mit ineinander übergehenden gerundeten Bereichen (4,8,9) versehen ist.

3. Verschleißelement nach Anspruch 1 oder 2, **dadurch gekennzeichnet, dass** der Gusskörper (1) zumindest im Bereich einer seiner Stirnflächen mit einer Ausnehmung (10) versehen ist.

4. Verschleißelement nach Anspruch 3, **dadurch gekennzeichnet, dass** die die Ausnehmung (10) begrenzenden Randbereiche (11,12) des Gusskörpers (1) zumindest teilweise konkav ausgebildet sind.

5. Verschleißelement nach einem der Ansprüche 1 bis 4, **dadurch gekennzeichnet, dass** die den Randbereichen (11,12) gegenüberliegende Stirnfläche (13) des Gusskörpers (1), respektive dort vorhandener weiterer Randbereiche, zumindest partiell konvex ausgebildet sind.

6. Verschleißelement nach einem der Ansprüche 1 bis 5, **dadurch gekennzeichnet, dass** im Bereich mindestens einer der Stirnflächen (13)/Ausnehmungen (10) vorgebbare Symbole eingegossen sind.

7. Verschleißelement nach einem der Ansprüche 1 bis 6, **dadurch gekennzeichnet, dass** der Gusskörper (1) aus einer Legierung besteht, die im Wesentlichen Eisen, Chrom, Silizium, Molybdän und Vanadium enthält.

8. Verschleißelement nach einem der Ansprüche 1 bis 7, **dadurch gekennzeichnet, dass** der Gusskörper (1) aus einem schweißbaren Vergütungsstahl besteht.

9. Verschleißelement nach einem der Ansprüche 1 bis 8, **dadurch gekennzeichnet, dass** der Gusskörper (1) im Bereich seiner Außenkontur mit Schweißnahtvorbereitungen, insbesondere zur Herstellung verdeckte HV-Nähte, versehen ist.

10. Mit einem Verschleißelement nach einem der Ansprüche 1 bis 9 ausgerüstetes abrasivem Einfluss ausgesetztes Bauteil, insbesondere ein Aufnahmeelement (19) für Schüttgut, wobei das Verschleißelement (1) an definierten inneren und/oder äußeren Flächen (21,22) eines Aufnahmeelementes (19) für einen Bagger, insbesondere einen Großbagger, vorgesehen ist.

11. Bauteil nach Anspruch 10, **dadurch gekennzeichnet, dass** das Verschleißelement (1) mit seiner konkav ausgebildeten Stirnfläche, respektive mit seinen konkav ausgebildeten Randbereichen (11,12), auf etwa konvex ausgebildete Bereiche (21) des Aufnahmeelements (19) aufgeschweißt ist.

12. Bauteil nach Anspruch 10, **dadurch gekennzeichnet, dass** das Verschleißelement (1) mit seiner konvex ausgebildeten Stirnfläche (13), respektive mit seinen konvex ausgebildeten Randbereichen auf etwa konkav ausgebildeten Bereichen (22) des Aufnahmeelements (19) aufgeschweißt ist.

## Claims

1. Wearing element for components subject to abrasive influences, especially for use in a receiving element (19) for bulk materials and consisting of a single-piece casting of a wear-resistant alloy, wherein the casting (1) is not straight in any of the planes (X, Y, Z) and **characterized in that** the casting (1) is almost plate-like and has an almost rectangular cross-section with the long sides (2) and the short sides (3) being formed by rounded sections (5,6,7,8) blending in with one another.

2. Wearing element of claim 1, **characterized in that** the casting (1) is provided over its height (Z) with rounded sections (4,8,9) blending in with one another.

3. Wearing element of claim 1 or 2, **characterized in that** the casting (1) is provided at least on one of its faces with a recess (10).

4. Wearing element of claim 3, **characterized in that** the sections (11,12) of casting (1) bordering the recess (10) are at least partly concave in shape.

5. Wearing element of one of claims 1 thru 4, **characterized in that** the face (13) of casting (1) opposite the bordering sections (11,12) and respectively other bordering sections existing therein are at least partly convex in shape.

6. Wearing element of one of claims 1 thru 5, **characterized in that** in the area of at least one of the faces (13) / recesses (10) there may be cast-in predefined markings.

7. Wearing element of one of claims 1 thru 6, **characterized in that** the casting (1) consists of an alloy essentially composed of iron, chromium, silicon, molybdenum and vanadium.

8. Wearing element of one of claims 1 thru 7, **characterized in that** the casting (1) consists of a weldable tempering steel.

9. Wearing element of one of claims 1 thru 8, **characterized in that** the casting (1) is provided in the area of its outer contour with weld seam preparations especially for the realization of hidden single-bevel butt welds.

10. A component provided with a wearing element of one of the claims 1 thru 9 and subject to abrasive influences, especially a receiving element (19) for bulk materials wherein the wearing element (1) is provided for use on defined inner and/or outer surfaces (21,22) of a receiving element (19) of an excavator, especially of a heavy-weight excavator.

11. A component as of claim 10, **characterized in that** the wearing element (1) with its concave face, respectively its concave bordering sections (11,12), is welded onto almost convex areas (21) of the receiving element (19).

12. A component as of claim 10, **characterized in that** the wearing element (1) with its convex face (13), respectively its convex bordering sections, is welded onto almost concave areas (22) of the receiving element (19).

## Revendications

1. Elément d'usure pour composants exposés aux influences abrasives, en particulier pour l'utilisation dans un récipient (19) pour matériaux en vrac et constitué par une pièce en fonte monobloc d'un alliage résistant à l'usure, la pièce en fonte (1) n'étant pas plat dans aucun des plans (X, Y, Z), **caractérisé en ce que** la pièce en fonte (1) est à peu près de la forme d'une plaque et de section transversale à peu près rectangulaire, les côtés longitudinaux (2) et transversaux (3) étant constitués par des zones arrondies (5,6,7,8) se confondant l'une avec l'autre.

2. Elément d'usure selon la revendication 1, **caractérisé en ce que** la pièce en fonte (1), sur toute sa hauteur (Z), est pourvue de zones arrondies (4,8,9) se confondant l'une avec l'autre.

3. Elément d'usure selon la revendication 1 ou 2, **caractérisé en ce que** la pièce en fonte (1) est pourvue au moins sur l'une de ses faces d'un creux (10).

4. Elément d'usure selon la revendication 3, **caractérisé en ce que** les zones de bordure (11,12) délimitant le creux (10) de la pièce en fonte (1) sont au moins en partie de forme concave.

5. Elément d'usure selon l'une des revendications 1 à 4, **caractérisé en ce que** la face (13) de la pièce en fonte (1) opposée aux zones de bordure (11,12), respectivement à d'autres zones de bordures éventuellement existantes, sont au moins en partie de forme convexe.

6. Elément d'usure selon l'une des revendications 1 à 5, **caractérisé en ce que** des symboles à choisir selon les besoins sont coulés au moins dans l'une des faces (13) / dans l'un des creux (10).

7. Elément d'usure selon l'une des revendications 1 à 6, **caractérisé en ce que** la pièce en fonte (1) consiste en un alliage composé essentiellement du fer, du chrome, du silicium, du molybdène et du vanadium.

8. Elément d'usure selon l'une des revendications 1 à 7, **caractérisé en ce que** la pièce en fonte (1) consiste en un acier de traitement soudable.

9. Elément d'usure selon l'une des revendications 1 à 7, **caractérisé en ce que** la pièce en fonte (1) est pourvu, dans la zone de son contour extérieur, de préparations des bords particulièrement destinées à la réalisation de soudures à V asymétrique cachées.

10. Composant équipé d'un élément d'usure selon l'une des revendications 1 à 9 et exposé aux influences abrasives, en particulier un récipient pour matériaux en vrac (19), l'élément d'usure (1) étant prévu sur des surfaces définies intérieures et/ou extérieures (21,22) d'un récipient (19) pour une pelle mécanique et particulièrement une pelle mécanique de grandes dimensions.

11. Composant selon la revendication 10, **caractérisé en ce que** l'élement d'usure (1) est soudé avec sa face concave, respectivement ses bords concaves (11,12), sur des zones quasiment convexes (21) du récipient (19).

12. Composant selon la revendication 10, **caractérisé en ce que** l'élement d'usure (1) est soudé avec sa face convexe (13), respectivement ses bords convexes, sur des zones quasiment concaves (22) du récipient (19).
